Europäisches Patentamt

**European Patent Office**

**Office européen des brevets**

(11) Numéro de publication: **0 062 342**
**A1**

## DEMANDE DE BREVET EUROPEEN

(21) Numéro de dépôt: **82102905.5**

(22) Date de dépôt: **05.04.82**

(51) Int. Cl.³: **B 65 G 67/02**

(30) Priorité: **06.04.81 FR 8106855**

(43) Date de publication de la demande: **13.10.82**
**Bulletin 82/41**

(84) Etats contractants désignés: **AT BE CH DE GB IT LI LU NL SE**

(71) Demandeur: **SOCIETE FRANCAISE DES ASCENSEURS KONE, Tour Gan Cedex 13, F-92082 Paris la Defense (FR)**

(72) Inventeur: **Blaize, Didier, Galaxie Onyx 10, rue Vandrezanne, F-75644 Paris Cedex 13 (FR)**
Inventeur: **Dordhain, Bernard, 39, rue Gambetta, F-92800 Puteaux (FR)**
Inventeur: **Stenac, Jean-Paul, 4, rue Tardieu, F-75018 Paris (FR)**

(74) Mandataire: **Casalonga, Axel et al, BUREAU D.A. CASALONGA OFFICE JOSSE & PETIT Baaderstrasse 12-14, D-8000 München 5 (DE)**

(54) **Dispositif de chargement rapide pour véhicules de transport, notamment pour camions.**

(57) Dispositif de chargement rapide pour véhicules de transport, notamment pour camions, constitué par des trains de chariots destinés à recevoir les charges et solidarisés entre eux, présentant de front une largeur correspondant à celle de l'ouverture du camion ou autre, ces trains (1, 2, 3) étant susceptibles de se déplacer parallèlement et simultanément sur des voies de guidage (5), caractérisé par ceci que chaque chariot (4) d'un train comporte au moins un élément de support allongé du type chaîne sans fin (13), les éléments de support des différents chariots d'un train étant rendus solidaires, et qu'il est prévu un moyen d'entraînement en translation (14) des trains de chariots dans un sens ou dans l'autre, et des moyens (20) pour mouvoir en rotation les éléments de support pour un sens determiné de déplacement des trains de chariots.

ACTORUM AG

## Dispositif de chargement rapide pour véhicules de transport, notamment pour camions

L'invention concerne un dispositif de chargement rapide pour véhicules de transport tels que camions, remorques de camions, wagons, bateaux ou avions.

On a depuis longtemps recherché des dispositifs permettant de charger rapidement des véhicules de transport de marchandises. Il est connu d'utiliser à cet effet des containers ou conteneurs de dimensions normalisées permettant un chargement avec un minimum de pertes de volume, et avec des engins de chargement adaptés à ces conteneurs.

On a également préconisé, en particulier pour le chargement de camions, d'utiliser des attelages de chariots de transbordement. Cependant, les dispositions de ce genre étaient soumises à des contraintes, notamment en ce qui concernait les dimensions de la plate-forme à charger et les types de palettes utilisées pour recevoir les conteneurs.

L'invention a pour objet un dispositif de chargement pour véhicules de transport, notamment pour camions, destiné à équiper un quai ou autre surface de départ contre laquelle vient accoster le camion, ce dispositif comprenant des trains de chariots attelés les uns aux autres et recevant les conteneurs par l'intermédiaire de palettes de manutention, caractérisé par ceci qu'au moins une pluralité de chariots attelés les uns aux autres montés sur des voies de guidage, comportent des organes de translation en avant ou en arrière pour pouvoir être introduits ou retirés du camion, et des organes de support des conteneurs pouvant être entraînés longitudinalement de sorte que les conteneurs soient transmis d'un chariot à un autre, les organes de translation et les organes de support pouvant être mus en sens opposés de manière que les conteneurs soient contraints de rester fixes en position alors que les chariots se déplacent, et qu'ainsi les conteneurs soient déposés sur le plancher du véhicule de transport.

Pour permettre le dépôt sur le sol, le train de chariots peut être muni à l'avant d'un élément adaptateur formant plan incliné facilitant le dépôt des conteneurs.

Selon la largeur du camion, plusieurs trains de chariots peuvent être mus simultanément et parallèlement.

D'une façon plus particulière, l'organe de translation est un palan actionnant un palonnier dont est muni l'un des chariots, de préférence le dernier, et qui solidarise également les trains parallèles de chariots à entraîner simultanément.

De façon particulière également, l'organe de support est constitué par des séries de chaînes sans fin équipant individuellement les chariots et reliées entre elles par des pignons d'entraînement, ces pignons ou l'un d'eux pouvant être mus en rotation pour l'entraînement des chaînes.

De façon plus particulière encore, le ou les pignons d'entraînement sont mus par le câble du palan, de telle sorte que les chaînes et les chariots soient entraînés en sens inverse.

Ces dispositions, ainsi que d'autres également, apparaîtront clairement d'après la description qui sera donnée ci-après à titre d'exemple d'une forme de réalisation représentée au dessin annexé, dans lequel :

- la figure 1 est une vue d'ensemble en plan du dispositif de chargement ;

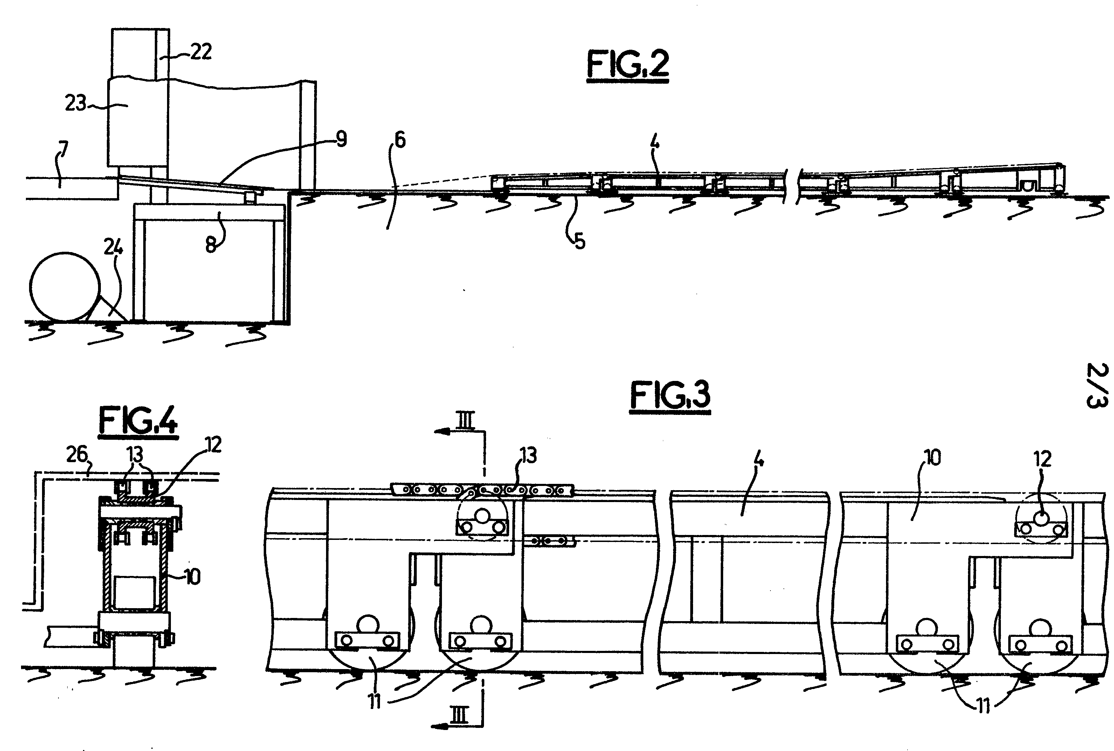

- la figure 2 est une vue en élévation correspondant à la figure 1 ;

- la figure 3 est une vue en élévation, à plus grande échelle, d'un chariot ;

- la figure 4 est une coupe selon III-III de la figure 3 ;

- les figures 5a, 5b, 5c montrent divers adaptateurs pour le chariot de tête ;

- la figure 6 est une vue de côté d'un chariot portant les organes d'entraînement.

En se reportant au dessin et notamment aux figurés 1 et 2, qui en représentent une vue d'ensemble, un dispositif chargeur conforme à l'invention comporte une pluralité de trains 1, 2, 3 de chariots disposés parallèlement, chaque chariot tel que 4 pouvant se déplacer grâce à des roues ou galets guidés dans des rainures 5 de guidage creusées dans le sol.

Cet ensemble est placé sur un quai 6 contre lequel les camions à charger 7 peuvent accoster par le hayon arrière. Une plate-forme 8 reçoit des éléments de guidage inclinables 9 permettant de rattraper la différence de niveau pouvant exister entre le quai et la plate-forme du camion.

Chaque chariot tel que 4 est composé d'un bâti soudé 10 muni de quatre roues 11, montées folles sur leur axe assurant le roulement dans des rainures ou rails de guidage, et comportant à sa partie arrière haute, une paire de pignons 12 à deux roues dentées chacun pour chaînes sans fin à rouleaux, un pignon étant situé de chaque côté du chariot, les deux roues ayant même diamètre et même nombre de dents.

Les chariots sont accouplés de façon convenable, par exemple au moyen de fourches s'emboîtant l'une dans l'autre et solidarisées et articulées par l'axe des roues dentées. Des chaînes sans fin 13 engrènent avec les roues du pignon de tête et du pignon de queue, de manière à offrir par leurs rouleaux une surface roulante allant d'un bout à l'autre du train de chariots, le premier chariot comportant à la fois un pignon de tête et un pignon de queue.

En avant du premier chariot peut être disposé un élément de tête ou adaptateur tel que 4a, 4b ou 4c, de hauteur plus réduite ou à surface inclinée, permettant d'abaisser un conteneur avant de le déposer sur le sol.

Les chaînes à rouleaux sont destinées à recevoir les conteneurs disposés côte-à-côte, par l'intermédiaire de palettes schématiquement représentées en traits mixtes 26. On conçoit que si l'une des paires de pignons est entraînée en rotation, les autres chaînes du même train seront également entraînées et, de ce fait, les conteneurs avanceront par rapport au chariot. Cependant, si le train de chariots est entraîné en sens inverse, les conteneurs resteront stationnaires et seront déposés sur le sol de la plate-forme du camion pendant que le train de chariots s'éloignera vers l'arrière.

Le mouvement de translation du train de chariots est obtenu de la façon suivante : les différents trains de chariots coopérant à un même chargement sont accouplés entre eux par un palonnier 27 engagé en travers des bâtis et maintenu en place de toute façon convenable. Il est ainsi possible, en exerçant un effort de traction sur le palonnier ou un élément d'un des chariots, de déplacer simultanément l'ensemble des trains associés. Cet effort est obtenu au moyen d'un câble 14 fixé à une extrémité à un chariot et qui, après passage sur des poulies de guidage 15, est enroulé sur un cabestan motorisé 16. Une poulie de renvoi 17 permet, lorsqu'elle est introduite sur le parcours du câble, d'inverser le sens d'action sur l'ensemble du train.

Le mouvement des chaînes est réalisé ainsi qu'il a été dit par l'entraînement d'au moins un des pignons dentés d'un des trains associés. A cet effet, les axes des pignons de chariots contigus, par exemple les derniers chariots des différents trains associés peuvent être rendus solidaires, de telle sorte que toutes les chaînes soient entraînées à partir d'une action sur un seul chariot d'un des trains.

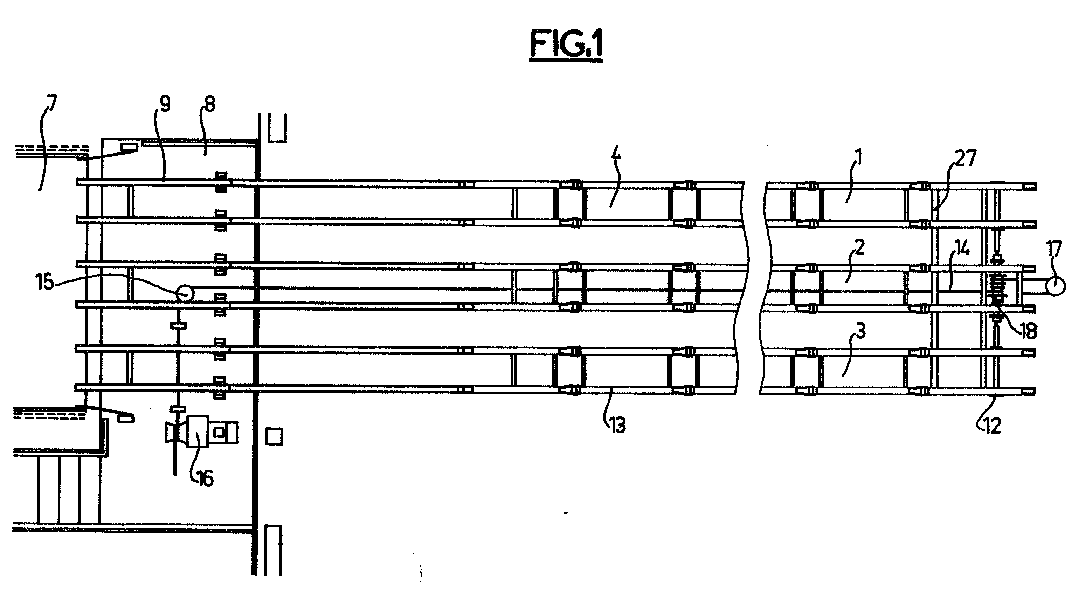

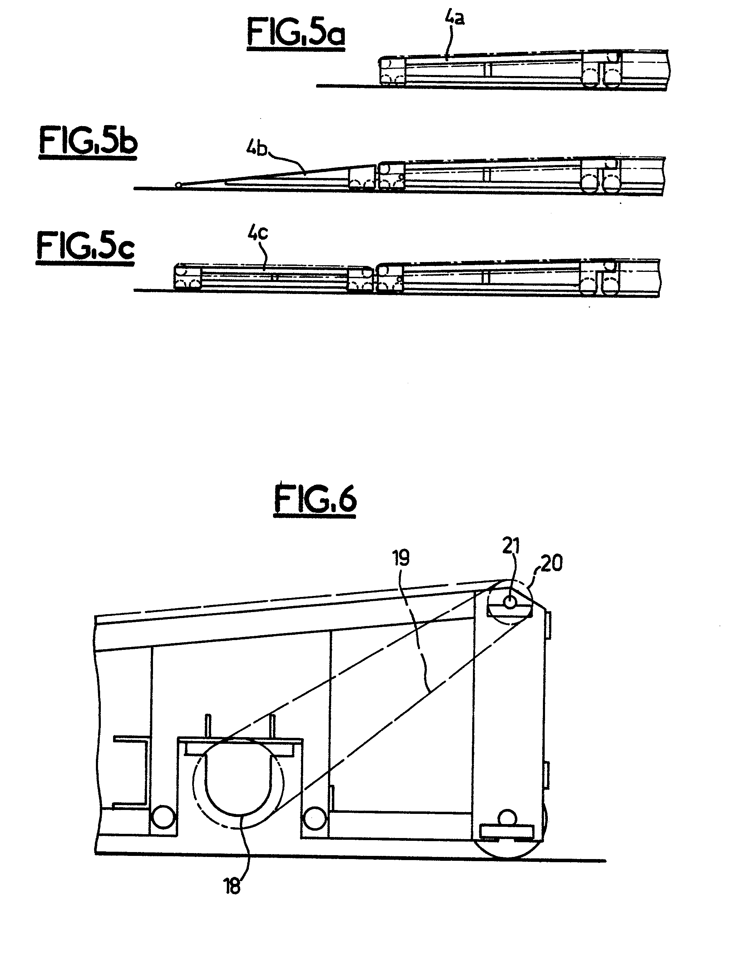

Cet entraînement est réalisé ainsi que représenté à la figure 1 et à la figure 6 par enroulement du câble de traction 14 sur un tambour 18 qui, lui-même, est relié par courroie sans fin 19 à une poulie 20 montée sur l'axe de pignons 21. La poulie 20 est montée sur l'axe au moyen d'un coupleur à roue libre de manière qu'il n'y ait entraînement de la chaîne que pour un seul sens de défilement du câble, c'est-à-dire dans le sens qui tire les chariots pour les sortir puis les éloigner du camion à charger.

Le fonctionnement du dispositif s'effectue de la façon suivante : on dispose tout d'abord les charges sur des palettes mono-faces ou bi-faces de manutention reposant sur

- 5 -

0062342

les chaînes des trains de chariots associés pour un chargement, ces trains de chariots étant alors sur le quai de chargement. On supposera, par exemple, que deux trains de chariots correspondent à la largeur du chargement du camion destiné à recevoir la charge et que, les palettes étant double face, un certain intervalle doit être réservé entre la surface de la palette et le plancher de chargement.

L'opération s'effectue en trois temps :

a) entrée du chargeur dans le camion.

Comme il a été dit, la plate-forme métallique 8 accolée au quai supporte les éléments de liaison entre un camion 7 et les guides 5, rails ou rainures portés par le quai de chargement 6. Ces éléments sont constitués par des rails abattants 9 équilibrés, réglables en inclinaison et en profondeur.

L'introduction de la charge est facilitée par un portique 22 équipé de volets latéraux 23, tandis que le camion est immobilisé par des chasse-roues 24 assurant également son positionnement pour recevoir la charge.

b) préparation du recul du chargeur.

Comme on l'a vu, le cabestan 16 assure, par traction sur le câble 14 tirant directement sur un chariot, l'avancement des trains de chariots par le palonnier 13. Lorsque le chargeur, c'est-à-dire l'ensemble des trains de chariots, est entré complètement à l'intérieur du camion, l'opérateur décroche la corde 14 du chariot et lui fait effectuer un tour autour de la poulie de renvoi 17, puis la raccroche au chariot.

c) sortie du chargeur - dépose des palettes.

Lorsque le cabestan 16 tourne en enroulant le câble sur son tambour, les chariots sont tirés vers la poulie 17, c'est-à-dire que le chargeur sort du camion ; en même temps, du fait que le câble 14 est enroulé autour du tambour 18, il l'entraîne en rotation, ce qui entraîne la rotation de la poulie associée et en conséquence celle de la courroie de transmission 19 et de l'axe des pignons 20. Cet axe transmet son mouvement à l'axe homologue du train de chariots accolés, ce

0062342

qui entraîne la rotation des pignons de roues dentées et en conséquence celle des chaînes à rouleaux, le sens de rotation étant tel que ces chaînes entraînent les charges et leurs palettes vers l'intérieur du camion. Par le choix convenable des démultiplications, la vitesse de retrait des chariots est égale et de sens contraire à celle des chaînes, de sorte que le premier chariot passe progressivement sous les différentes charges et que celles-ci sont déposées sur le plancher du camion par l'intermédiaire de leurs palettes.

Lorsqu'un élément adaptateur a été mis en tête du train de chariots, pour faciliter la dépose des charges, par exemple lorsqu'il s'agit de palettes mono-faces, cet élément adaptateur n'est pas chargé de sorte que lorsque les chariots ont été poussés à l'intérieur du camion, la dernière charge se trouve encore à l'extérieur.

Avec cette disposition il est nécessaire, avant d'effectuer la traction vers l'arrière des chariots, d'éloigner la poulie 17, montée sur un chariot coulissant, de sa position d'origine d'une valeur égale à la moitié de la longueur de l'élément d'adaptation. De cette façon, lorsque le cabestan tourne le tambour 18 tourne et motorise les chaînes, alors que la poulie 17 revient vers sa position d'origine. Dans ces conditions, les trains de chariots restent immobiles alors que les palettes et leurs charges avancent sur l'élément d'adaptation.

A la fin de cette phase d'opération, toutes les palettes se trouvent à l'intérieur du camion et la poulie 17 est revenue à sa position d'origine. A ce moment, l'opération se déroule comme précédemment.

Comme il a été dit, l'invention a été décrite en application au chargement d'un camion, mais elle pourrait aussi bien être appliquée à tout autre véhicule de transport de marchandises.

## REVENDICATIONS

1. Dispositif de chargement rapide pour véhicules de transport, notamment pour camions, constitué par des trains de chariots destinés à recevoir les charges et solidarisés entre eux, présentant de front une largeur correspondant à celle de l'ouverture du camion ou autre, ces trains (1, 2, 3) étant susceptibles de se déplacer parallèlement et simultanément sur des voies de guidage (5), caractérisé par ceci que chaque chariot (4) d'un train comporte au moins un élément de support allongé du type chaîne sans fin (13), les éléments de support des différents chariots d'un train étant rendus solidaires, et qu'il est prévu un moyen d'entraînement en translation (14) des trains de chariots dans un sens ou dans l'autre, et des moyens (20) pour mouvoir en rotation les éléments de support pour un sens déterminé du déplacement des trains de chariots, ces moyens (20) étant reliés de façon convenable aux moyens d'entraînement (14) de telle sorte que ces différents moyens soient mûs à partir d'un moteur unique.

2. Dispositif selon la revendication 1, caractérisé par ceci que le moyen d'entraînement est constitué par un câble (14) fixé d'une part à un des chariots (1) des trains de chariots solidaires entre eux, et d'autre part à un cabestan (16) ou organe analogue, le câble passant sur des poulies de guidage et pouvant également passer ou non sur une poulie de renvoi disposée au-delà des chariots par rapport au cabestan, de sorte que la traction sur l'ensemble s'effectue dans un sens ou l'autre suivant que le câble passe ou non sur cette poulie de renvoi.

3. Dispositif selon la revendication 1, caractérisé par ceci que chaque chariot comporte un pignon à doubles roues dentées, chacune d'elles engrenant avec une chaîne sans fin, ces deux chaînes s'étendant dans le sens longitudinal des chariots à la suite l'une de l'autre.

4. Dispositif selon la revendication 1, caractérisé par ceci qu'au moins un des chariots comporte un tambour (18) autour duquel s'enroule le câble de traction, ce tambour étant relié par une courroie sans fin (19) à un pignon double (20) des chaînes sans fin pour entraîner ce dernier en rotation, un élément à roue libre étant interposé pour que cet entraînement se fasse seulement pour un sens de rotation du tambour.

5. Dispositif selon la revendication 1, dans lequel des éléments adaptateurs (4a, 4b, 4c) sont disposés en tête des trains de chariots, ces éléments étant de hauteur variable et destinés à permettre le dépôt des charges sur le sol de camion ou autre avec la moindre chute possible.

6. Dispositif selon la revendication 2, dans lequel la poulie de renvoi (17) est montée sur un support coulissant pouvant être éloigné de sa position normale d'une distance au moins égale à la moitié de la longueur d'un élément adaptateur.

7. Dispositif selon la revendication 1, comportant en outre une plate-forme (8) constituée d'une simple rampe de type usuel interposée entre le quai ou autre emplacement de chargement et le camion, cette plate-forme recevant le cabestan (16) des guides inclinables (9) prolongeant les voies de roulement des chariots, et des volets d'orientation facilitant l'entrée des chariots chargés à l'intérieur du camion.

FIG.1

0062342

# FIG.2

# FIG.3

# FIG.4

0062342

FIG.5a

FIG.5b

FIG.5c

FIG.6

Office européen
des brevets

**RAPPORT DE RECHERCHE EUROPEENNE**

0062342

Numéro de la demande

EP 82 10 2905

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US - A - 3 337 066 (REED) <br><br> * colonne 4, lignes 8-75; colonne 5, lignes 1-66; figures 1,8,9, 14 * <br><br> -- | 1,3-5 | B 65 G 67/02 |
| Y | DE - A - 2 747 250 (MANNESMANN) <br><br> * page 1, revendication 1; figures 1,3 * <br><br> -- | 1,3-5 | |
| A | US - A - 3 186 568 (SPINANGER) <br><br> * colonne 6, lignes 17-58; figures 1-3 * <br><br> ------ | 2 | |
| | | | **DOMAINES TECHNIQUES RECHERCHES (Int. Cl. 3)** <br><br> B 65 G |

Le present rapport de recherche a été établi pour toutes les revendications

| Lieu de la recherche | Date d'achèvement de la recherche | Examinateur |
|---|---|---|
| La Haye | 28-06-1982 | OSTIJN |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant